# EUROPÄISCHE PATENTSCHRIFT

(11) **EP 2 400 614 B1**
(45) Veröffentlichungstag und Bekanntmachung des Hinweises auf die Patenterteilung: **22.08.2012**
(21) Anmeldenummer: 11004138.1
(22) Anmeldetag: 19.05.2011
(51) Int. Cl.: E02D 29/02, H02G 3/18

(54) **Hebesystem für einen Verteiler eines Unterflursystems**
Lifting system for a distributor of an under-floor system
Système de levée pour un répartisseur d'un système souterrain

(30) Priorität: 28.06.2010 DE 202010009603 U
(43) Veröffentlichungstag der Anmeldung: 28.12.2011
(73) Patentinhaber: Kubik, Ralf, 63849 Leidersbach (DE)
(72) Erfinder: Kubik, Ralf, 63849 Leidersbach (DE)
(74) Vertreter: Ruckh, Rainer Gerhard

(56) Entgegenhaltungen:
- EP-A1- 0 929 136
- DE-U1- 29 620 779
- FR-A1- 2 703 847

## Beschreibung

Die Erfindung betrifft ein Hebesystem für einen Verteiler eines Unterflursystems.

Unterflursysteme werden seit einiger Zeit verstärkt im Bereich der öffentlichen Energieversorgung und der Telekommunikation eingesetzt. Aus optischen und ästhetischen Gründen werden oberirdische Verteilerkästen mit elektrischen Verteilern, umfassend elektrische Anschlussmittel wie zum Beispiel NH-Leisten für Hausanschlüsse, in Städten und Gemeinden verstärkt auch unter die Erde verlegt. Die hierzu installierten Unterflursysteme umfassen generell einen Verteiler, der in einem Schacht platziert wird, wobei der Schacht ebenerdig mit einem Schachtdeckel verschließbar ist.

Bei bekannten Unterflursystemen sind typischerweise Hebesysteme vorgesehen, mittels derer ein Verteiler in einen Schacht einfahrbar und aus diesem ausfahrbar ist. Müssen zu Wartungszwecken oder dergleichen am Verteiler Arbeiten verrichtet werden, kann der Verteiler aus dem Schacht ausgefahren, so dass er für das Bedienpersonal einfacher zugänglich ist.

Ein wesentliches Problem derartiger Unterflursysteme besteht darin, dass bei Auftreten von starkem Regen beziehungsweise bei einem Rückstau in der Abwasserkanalisation der Schacht mit Wasser volllaufen kann. Durch dieses Eindringen von Wasser in den Schacht besteht eine große Gefahr einer Beschädigung oder sogar Zerstörung des im Schacht angeordneten Verteilers.

Die DE 296 20 779 U1 betrifft eine Senkelektrantanordnung, bestehend aus einer in einem Schacht versenkbaren Senkeinheit, die einen oder mehrere Anschlüsse für Wasser, Strom oder dergleichen aufweist, und einem Deckellager, welches wenigstens teilweise auf einer oberen Umrandung des Schachts aufliegt und auf welchem ein einen oberen Abschluss der Senkeinheit bildender Deckel in versenktem Zustand aufliegt. Das Deckellager weist wenigstens einen wenigstens teilweise über der Umrandung angeordneten hohlraumartigen Zuführkasten auf, durch welchen Stromkabel, Wasserleitungen und dergleichen von außen in einen aus Schacht, Deckellager und Senkeinheit gebildeten Innenraum einführbar sind.

Die EP 0 929 136 A1 betrifft eine Energieverteilungsstation mit einem in einen Boden einzusenkenden Grubengehäuse, welches eine durch einen aufklappbaren Deckel verschließbare, eine Anzahl von zur Spannungsentnahme durch Privatpersonen oder Betriebe bestimmten Steckdosen enthaltende Abteilung und eine durch einen zweiten Deckel verschließbare Abteilung zum Aufnehmen eines an einem unterirdischen Kabel anzuschließenden Übergangskasten aufweist. Der zweite Deckel trägt wenigstens einen weiteren, durch biegsame Kabel mit dem Übergangskasten bzw. mit den Steckdosen zu verbindenden Kasten für Sicherungs- und Meßapparatur. Die Steckdosen sind gesondert oder gruppenweise in unten offenen und zum übrigen geschlossenen Behältern angeordnet, die beim Aufklappen des jeweiligen Deckels aus der jeweiligen Abteilung gehoben werden können.

Die FR 2 703 847 A1 betrifft eine Energieverteilungsstation, die eine Gehäuseeinheit mit Elektrikkomponenten aufweist, die an einem Gestell höhenverstellbar gelagert ist und so in einen Schacht einfahrbar und aus diesem ausfahrbar ist. Von den Elektronikkomponenten führt ein flexibles Kabel zu einem im Schacht stationär angeordneten Anschlusskasten.

Der Erfindung liegt die Aufgabe zugrunde, ein Hebesystem der eingangs genannten Art so auszubilden, dass mit möglichst geringem konstruktivem Aufwand die Betriebssicherheit eines Verteilers eines Unterflursystems erhöht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Hebesystem umfasst einen Verteiler, der in einen Schacht einfahrbar und aus diesem ausfahrbar ist. Eine Tauchglocke ist vorgesehen, die über den Verteiler gestülpt ist und in einer waagrechten Position gehalten ist, so dass kein Wasser in die Tauchglocke eindringen kann, solange der Verteiler ganz oder teilweise im Schacht angeordnet ist. Wenn bei Ausfahren des Verteilers aus dem Schacht die Unterkante der Tauchglocke die Oberkante des Schachts erreicht, wird der Verteiler aus der Tauchglocke gelöst.

Durch den Einsatz der Tauchglocke ist der im Schacht angeordnete Verteiler vollständig gegen in den Schacht eindringendes Wasser geschützt, so dass Wasserschäden des Verteilers vollständig vermieden werden. Das Prinzip des mit der Tauchglocke erzielten Schutzes des Verteilers beruht einfach darauf, dass die über den Verteiler gestülpte Tauchglocke waagrecht orientiert ist und damit auch das untere offene Ende der Tauchglocke. Durch die waagrechte Orientierung der Tauchglocke kann die in dieser angeordneten Luft bei Eindringen von Wasser in den Schacht nicht entweichen, was bedeutet, dass das Wasser nicht in Kontakt mit dem Verteiler kommen kann. Voraussetzung hierfür ist natürlich, dass der Verteiler vollständig im Innenraum der Tauchglocke liegt.

Ein wesentlicher Aspekt der Erfindung besteht darin, dass die Tauchglocke waagrecht ausgerichtet nicht nur dann den Verteiler umgibt und schützt, wenn die Verteiler mit dem Hebesystem in seine untere Grenzposition, das heißt vollständig in den Schacht eingefahren ist. Vielmehr bleibt die Tauchglocke auch in ihrer den Verteiler schützenden waagrechten Position wenn der Verteiler mit dem Hebesystem verfahren wird, das heißt in den Schacht eingefahren oder aus diesem ausgefahren ist. Insbesondere ist dieser Schutz entscheidend, wenn der Verteiler bei mit Wasser vollgelaufenem Schacht aus diesem ausgefahren wird. Würde bereits beim Hochfahren des Verteilers die Tauchglocke gekippt oder gar vom Verteiler abgehoben, würde der Verteiler sofort dem Wasser ausgesetzt sein. Dieser Vorgang ist besonders deshalb kritisch, da zumindest bei Beginn des Hochfahrens der Schachtdeckel noch geschlossen ist und das Bedienpersonal den Schacht nicht einsehen kann, so dass das Bedienpersonal nicht weiß, ob der Schacht vollgelaufen ist.

Mit dem erfindungsgemäßen Hebesystem wird diese Problematik auf einfache Weise dadurch gelöst, dass die Tauchglocke in ihrer waagrechten Position während des gesamten Verfahrvorgangs des Verteilers verbleibt Insbesondere bei Hochfahren des Verteilers wird die Tauchglocke erst dann vom Verteiler gelöst, wenn die Unterkante der Tauchglocke die Oberkante des Schachts erreicht hat und damit der Verteiler vollständig aus dem Schacht ausgefahren ist.

Auch bei Einfahren des Verteilers ist dieser durch die waagrecht gehaltene Tauchglocke geschützt, insbesondere auch bei einem mit Wasser vollgelaufenem Schacht.

Generell ist der Schacht bei in diesem eingefahrenen Verteiler mit einem Schachtdeckel verschlossen.

Vorteilhaft wird bei Ausfahren des Verteilers aus dem Schacht der Schachtdeckel selbsttätig geöffnet.

Das Öffnen des Schachtdeckels erfolgt dabei vorteilhaft mit dem Hebesystem, das zum Heben und Senken des Verteilers dient. Durch diese Doppelfunktion des Hebesystems wird ein konstruktiv einfacher Aufbau der Betätigungselemente für den Verteiler und den Schachtdeckel erhalten.

Gemäß einer ersten Variante der Erfindung weist das Hebesystem ein Teleskopsystem auf, mittels dessen der Verteiler senkrecht anhebbar oder absenkbar ist. Mittels des Teleskopsystems ist auch die Tauchglocke vom Verteiler lösbar, indem die Tauchglocke über den Verteiler hinaus nach oben verfahrbar ist. Die Tauchglocke ist an der Unterseite des Schachtdeckels befestigt und mit dem Schachtdeckel vom Verteiler weg nach oben verfahrbar.

Vorteilhaft weist das Teleskopsystem eine Spindel, ein Gasdrucksystem oder ein Hydrauliksystem auf.

Das Teleskopsystem bildet ein räumlich kompaktes Betätigungsmittel mit dem der Verteiler einerseits und der Schachtdeckel mit der Tauchglocke andererseits betätigt werden kann. Besonders vorteilhaft hierbei ist, dass der Verteiler einerseits und die Tauchglocke mit dem Schachtdeckel andererseits nicht nur gemeinsam sondern auch getrennt voneinander bewegt werden können, wodurch auch die Tauchglocke vom Verteiler abgenommen oder auf diesen auf gesetzt werden kann.

Gemäß einer zweiten Variante der Erfindung weist das Hebesystem eine Hebegabel auf, mittels derer der Verteiler senkrecht anhebbar oder absenkbar ist. Bei im Schacht angeordneten Verteiler sitzt die Tauchglocke auf der Hebegabel auf. Die Tauchglocke wird an einer Schwenklagerung gelagert und vom Verteiler weggeschwenkt, sobald die Unterkante der Tauchglocke die Oberkante des Schachts erreicht hat.

Die Hebegabel stellt ein robustes, kostengünstig herstellbares Betätigungsmittel dar, mit dem der Verteiler zusammen mit der Tauchglocke im Schacht senkrecht verfahren werden kann.

Besonders vorteilhaft ist der Schachtdeckel an einer Schwenklagerung schwenkbar gelagert, wobei der Schachtdeckel mittels der Hebegabel schwenkbar ist.

Somit erfüllt die Hebegabel eine Doppelfunktion derart, dass mit dieser nicht nur der Verteiler verfahren sondern zusätzlich auch der Schachtdeckel gehoben werden kann, wodurch ein konstruktiv einfacher Aufbau des Gesamtsystems erhalten wird.

Vorteilhaft wird bei diesem System die Tauchglocke vom Verteiler manuell gelöst.

Beispielsweise kann die Tauchglocke an einer Schwenklagerung befestigt sein, die von einer Bedienperson betätigt wird.

Besonders vorteilhaft sind Sperr- und/oder Verriegelungsmittel vorgesehen, die ein Ablösen der Tauchglocke vom Verteiler erst dann freigeben, wenn die Unterkante der Tauchglocke die Oberkante des Schachts erreicht hat.

Die Erfindung wird im Folgenden anhand der Zeichnungen erläutert. Es zeigen:
- Figuren 1-3:: Erste Ausführungsform eines Hebesystems für einen Verteiler für unterschiedliche Positionen des Verteilers.
- Figuren 4-6:: Zweite Ausführungsform eines Hebesystems für einen Verteiler für unterschiedliche Positionen des Verteilers.

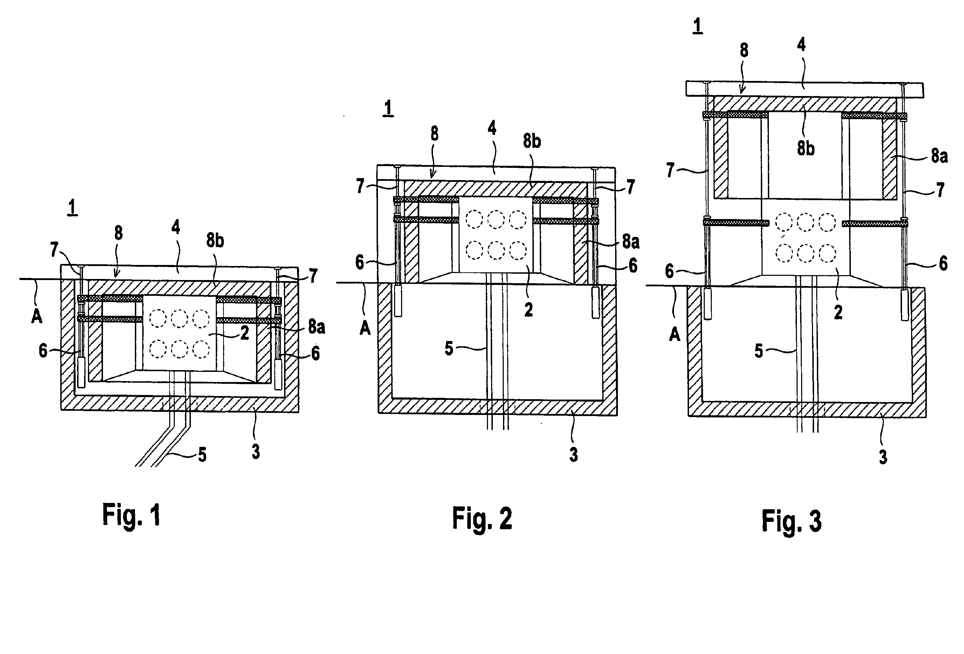

Die Figuren 1 bis 3 zeigen ein erstes Ausführungsbeispiel eines Hebesystems 1 für einen Verteiler 2 eines Unterflursystems. Der Verteiler 2 weist in bekannter Weise elektrische Anschlussmittel auf, insbesondere Schaltleisten und bildet so ein elektrisches Versorgungsmittel für eine Stromversorgung oder für ein Telekommunikationsnetz.

Während des Arbeitsbetriebs des Verteilers 2 befindet sich der Verteiler 2 vollständig in einem unterirdischen Schacht 3, dessen offene Oberseite, die vorzugsweise bündig mit der Erdoberkante (in den Figuren mit A bezeichnet) abschließt, mit einem Schachtdeckel 4 verschlossen ist. Vom Verteiler 2 wegführende Kabel 5 sind durch den Boden des Schachts 3 geführt.

Insbesondere zu Wartungszwecken ist es erforderlich, dass der Verteiler 2 aus dem Schacht 3 herausgefahren werden kann, damit er für Bedienpersonal frei zugänglich ist, um an diesem Arbeiten verrichten zu können. Hierzu dient das Hebesystem 1, das im vorliegenden Fall aus einem Teleskopsystem besteht. Das mechanisch über Spindeln oder auch über Hydraulik- oder Gasdrucksysteme betreibbare Teleskopsystem weist erste Teleskoparme 6 auf, mit welchen der Verteiler 2 in senkrechter Richtung verfahren werden kann. Weiterhin weist das Teleskopsystem zweite Teleskoparme 7 auf, mittels derer der Schachtdeckel 4 relativ zum Verteiler 2 verfahren werden kann.

Wie aus den Figuren 1 bis 3 ersichtlich, ist an der Unterseite des Schachtdeckels 4 eine Tauchglocke 8 befestigt. Die Tauchglocke 8 weist eine hohlzylindrische Form auf, wobei der zylindrische Mantel 8a der Tauchglocke 8 an seiner Oberseite mit einem Deckel 8b abgeschlossen ist. Die Unterseite der Tauchglocke 8 ist offen. Die Tauchglocke 8 weist eine Höhe auf, die größer ist als die Bauhöhe des Verteilers 2. Dadurch, dass die Tauchglocke 8 am Schachtdeckel 4 befestigt ist, kann diese zusammen mit dem Schachtdeckel 4 mit dem Hebesystem 1 verfahren werden.

In der in Figur 1 dargestellten unteren Grenzposition, in der der Verteilter 2 vollständig in den Schacht 3 eingefahren ist, liegt auch der Schachtdeckel 4 auf dem oberen Rand des Schachts 3 auf. Die an der Unterseite des Schachtdeckels 4 angeordnete Tauchglocke 8 ist dann vollständig über den Verteiler 2 gestülpt.

Bei einem Eindringen von Wasser in den Schacht 3, beispielweise bedingt durch einen Starkregen oder durch einen Rückstau in der Abwasserkanalisation, läuft zwar der Schacht 3 mit Wasser voll. Da jedoch die Tauchglocke 8 am Schachtdeckel 4 in einer waagrechten Position gelagert ist und damit auch der untere Rand der Tauchglocke 8 in einer waagrechten Ebene liegt, kann das eindringende Wasser die Luft im Innenraum der Tauchglocke 8 nicht verdrängen, das heißt das Wasser kann nicht zu dem in der Tauchglocke 8 liegenden Verteiler 2 gelangen, so dass der Verteiler 2 gegen Wasserkontakt geschützt ist.

Wird der Verteiler 2 mit den Teleskoparmen 6, 7 des Teleskopsystems bei mit Wasser gefülltem Schacht 3 nach oben gefahren, bleibt die Tauchglocke 8 in ihrer waagrechten Position über den Verteiler 2 gestülpt, so dass der Verteiler 2 auch während des Hochfahrens gegen Wasserkontakt geschützt bleibt. Dieser Schutz bleibt erhalten, bis der Verteiler 2 seine in Figur 2 dargestellte obere Grenzposition erreicht. In dieser Grenzposition ist die Tauchglocke 8 immer noch über den Verteiler 2 gestülpt. Die Unterkante der Tauchglocke 8 liegt dann auf der Höhe der Erdoberkante A.

In dieser Grenzposition ist bereits keine Gefahr eines Wasserkontakts mehr gegeben, da der Verteiler 2 vollständig aus dem Schacht 3 herausgefahren ist.

Aus dieser Grenzposition heraus wird die Tauchglocke 8 vollständig vom Verteiler 2 dadurch abgehoben, indem mit den Teleskoparmen 6, 7 des Teleskopsystems der Schachtdeckel 4 mit der Tauchglocke 8 weiter angehoben wird, der Verteiler 2 jedoch in der Grenzposition verbleibt. Figur 3 zeigt den Schachtdeckel 4 mit der Tauchglocke 8 in der oberen Endposition. Nun liegt der Verteiler 2 oberhalb des Schachts 3 frei, so dass dieser für Bedienpersonal frei zugänglich ist um Wartungsarbeiten oder dergleichen durchzuführen.

Soll dann der Verteiler 2 wieder in den Schacht 3 eingefahren werden, wird durch Verfahren der Teleskoparme 6, 7 zunächst der Schachtdeckel 4 mit der Tauchglocke 8 auf den Verteilter abgesenkt, so dass die Tauchglocke 8 über den Verteiler 2 gestülpt ist. Dann wird mittels der Teleskoparme 6, 7 die gesamte Anordnung des Verteilers 2, des Schachtdeckels 4 und der Tauchglocke 8 in den Schacht 3 eingefahren, bis die in Figur 1 dargestellte untere Grenzposition erreicht ist. Hierbei ist der Verteiler 2 auch bei mit Wasser vollgelaufenem Schacht 3 geschützt.

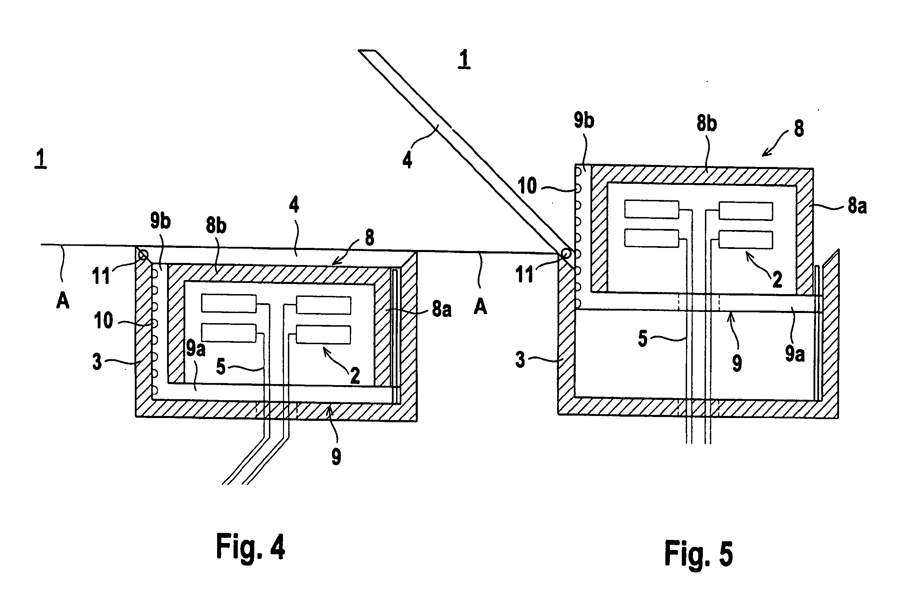

Die Figuren 4 bis 6 zeigen ein zweites Ausführungsbeispiel eines Hebesystems 1 für einen Verteiler 2 eines Unterflursystems. Auch in diesem Fall kann der Verteiler 2 mittels des Hebesystems 1 in senkrechter Richtung in einen Schacht 3 eingefahren oder aus diesem ausgefahren werden, wobei wiederum der mit der Erdoberkante A bündig abschließende obere Rand des Schachts 3 mit einem Schachtdeckel 4 abschließbar ist.

Analog zur Ausführungsform gemäß den Figuren 1 bis 3 ist auch bei der Ausführungsform der Figuren 4 bis 6 eine Tauchglocke 8 vorgesehen, die in der unteren Grenzposition des Verteilers 2 (Figur 4) und bei Verfahren des Verteilers 2 bis zu seiner oberen Grenzposition über den Verteiler 2 gestülpt ist und diesen gegen Eindringen von Wasser schützt. Die Tauchglocke 8 weist wieder einen Mantel 8a auf der oben mit einem Deckel 8b verschlossen ist. An der Unterseite ist die Tauchglocke 8 offen.

Das Hebesystem 1 umfasst im vorliegenden Fall eine Hebegabel 9, die mittels eines Hydrauliksystems, eines Antriebsmittels oder dergleichen in senkrechter Richtung nach unten oder oben im Schacht 3 verfahren werden kann. Die Hebegabel 9 weist zwei parallel verlaufende Gabelarme 9a auf, die in einer horizontalen Ebene verlaufen. Die Gabelarme 9a sind an einem in vertikaler Richtung verlaufenden Rahmen 9b gelagert, der entlang einer Wand des Schachts 3 geführt ist. Um ein Verkanten des Rahmens 9b an der Wand des Schachts 3 zu vermeiden, sind an dem Rahmen 9b Rollenführungen 10 vorgesehen.

Die Hebegabel 9 ist so dimensioniert, dass der Verteilter auf den Gabelarmen 9a aufsitzt und so mit der Hebegabel 9 transportiert werden kann. Die vom Verteiler 2 abgehenden Kabel 5 sind zwischen den Gabelarmen 9a geführt. Weiterhin ist die Hebegabel 9 so dimensioniert, dass die Tauchglocke 8 mit ihrem unteren Rand auf den Gabelarmen 9a aufsitzt, so dass die Tauchglocke 8 mit der Hebegabel 9 transportiert werden kann. Dabei ist die Tauchglocke 8 waagrecht ausgerichtet, insbesondere auch deren unterer Rand. Zweckmäßig weist die Tauchglocke 8 in diesem Fall einen rechteckigen Querschnitt auf, wobei die Breite an den Abstand der Gabelarme 9a angepasst ist, so dass gegenüberliegende untere Ränder der Tauchglocke 8 auf den Gabelarmen 9a auf liegen. Die Tauchglocke 8 ist dabei schwenkbar auf der Hebegabel 9 gelagert. Vorteilhaft können hierfür nicht dargestellten Gelenkverbindungen vorgesehen sein.

Wie aus den Figuren 4 bis 6 weiter ersichtlich, ist auch der Schachtdeckel 4 schwenkbar gelagert. Hierzu ist am oberen Rand des Schachts 4 eine Schwenklagerung 11 zur Lagerung des Schachtdeckels 4 vorgesehen.

Figur 4 zeigt den Verteiler 2 in seiner unteren Grenzposition, in welcher der Verteiler 2 vollständig in den Schacht 3 eingefahren ist. In dieser Grenzposition ist, analog zur Ausführungsform der Figuren 1 bis 3, die Tauchglocke 8 in waagrechter Position vollständig über den Verteiler 2 gestülpt, so dass bei Volllaufen des Schachts 3 der Verteiler 2 gegen Wasserkontakt geschützt ist.

Auch während des Anhebens des Verteilers 2 durch Hochfahren der Hebegabel 9 bleibt dieser, wie in Figur 5 dargestellt, durch die Tauchglocke 8 geschützt, da diese immer noch in waagrechter Position liegend über den Verteiler 2 gestülpt ist. Bei Hochfahren der Hebegabel 9 drückt deren Rahmen 9b von unten gegen den Schachtdeckel 4 und schwenkt diesen nach oben, das heißt öffnet ihn selbsttätig.

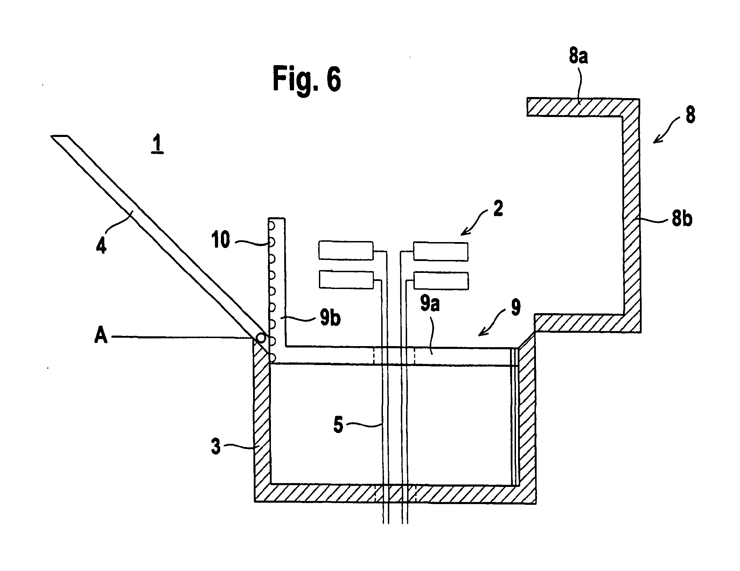

Erst wenn der Verteiler 2 seine obere Grenzposition erreicht hat (Figur 6), wobei dann die Unterkante der Tauchglocke 8 bündig mit der Erdoberkante A abschließt, wird die Tauchglocke 8, wie in Figur 6 dargestellt, vom Verteiler 2 weggeschwenkt. Der Schwenkvorgang erfolgt im vorliegenden Fall manuell. Prinzipiell können auch Betätigungsmittel für ein selbsttätiges Schwenken der Tauchglocke 8 vorgesehen sein.

Vorteilhaft sind weiterhin mechanische Sicherungsmittel vorgesehen, die ein Schwenken der Tauchglocke 8 erst dann freigeben, wenn der Verteiler 2 die obere Grenzposition erreicht hat.

Bei der in Figur 6 dargestellten Anordnung liegt der Verteiler 2 oberhalb des Schachts 3 frei und ist für Bedienpersonal einfach zugänglich.

Soll dann der Verteiler 2 wieder in den Schacht 3 eingefahren werden, wird zunächst die Tauchglocke 8 geschwenkt und über den Verteiler 2 gestülpt. Erst dann wird durch Verfahren der Hebegabel 9 der Verteiler 2 abgesenkt bis er die untere Grenzposition (Figur 4) erreicht. Bei dem Verfahren ist der Verteiler 2 durch die Tauchglocke 8 gegen Wasserkontakt geschützt. Nach dem Einfahren wird der Schachtdeckel 4 manuell geschlossen.

### Bezugszeichenliste

- (1): Hebesystem
- (2): Verteiler
- (3): Schacht
- (4): Schachtdeckel
- (5): Kabel
- (6): erster Teleskoparm
- (7): zweiter Teleskoparm
- (8): Tauchglocke
- (8a): Mantel
- (8b): Deckel
- (9): Hebegabel
- (9a): Gabelarm
- (9b): Rahmen
- (10): Rollenführung
- (11): Schwenklagerung
- (A): Erdoberkante

## Patentansprüche

1. Hebesystem (1), mittels dessen ein Verteiler (2) in einem Schacht (3) einfahrbar und aus diesem ausfahrbar ist, **dadurch gekennzeichnet, dass** eine Tauchglocke (8) vorgesehen ist, die über den Verteiler (2) gestülpt ist und in einer waagrechten Position gehalten ist, so dass kein Wasser in die Tauchglocke (8) eindringen kann, solange der Verteiler (2) ganz oder teilweise im Schacht (3) angeordnet ist, und dass dann, wenn bei Ausfahren des Verteilers (2) aus dem Schacht (3) die Unterkante der Tauchglocke (8) die Oberkante des Schachts (3) erreicht hat, der Verteiler (2) aus der Tauchglocke (8) gelöst wird und dass die Tauchglocke (8) in ihrer waagrechten Position während des gesamten Verfahrvorgamgs des Verteilers (2) verbleibt.

2. Hebesystem nach Anspruch 1, **dadurch gekennzeichnet, dass** der Schacht (3) bei in diesem eingefahrenen Verteiler (2) mit einem Schachtdeckel (4) verschlossen ist.

3. Hebesystem nach Anspruch 2, **dadurch gekennzeichnet, dass** bei Ausfahren des Verteilers (2) aus dem Schacht (3) der Schachtdeckel (4) selbsttätig geöffnet wird.

4. Hebesystem nach einem der Ansprüche 1 bis 3, **dadurch gekennzeichnet, dass** dieses ein Teleskopsystem aufweist, mittels dessen der Verteiler (2) senkrecht anhebbar oder absenkbar ist.

5. Hebesystem nach Anspruch 4, **dadurch gekennzeichnet, dass** mittels des Teleskopsystems die Tauchglocke (8) vom Verteiler (2) lösbar ist, indem die Tauchglocke (8) über den Verteiler (2) hinaus nach oben verfahrbar ist.

6. Hebesystem nach Anspruch 5, **dadurch gekennzeichnet, dass** die Tauchglocke (8) an der Unterseite des Schachtdeckels (4) befestigt ist, und dass mittels des Teleskopsystems die Tauchglocke (8) mit dem Schachtdeckel (4) vom Verteiler (2) weg nach oben verfahrbar ist.

7. Hebesystem nach einem der Ansprüche 4 bis 6, **dadurch gekennzeichnet, dass** das Teleskopsystem eine Spindel, ein Gasdrucksystem oder ein Hydrauliksystem aufweist.

8. Hebesystem nach einem der Ansprüche 1 bis 3, **dadurch gekennzeichnet, dass** dieses eine Hebegabel (9) aufweist, mittels derer der Verteiler (2) senkrecht anhebbar oder absenkbar ist.

9. Hebesystem nach Anspruch 8, **dadurch gekennzeichnet, dass** bei im Schacht (3) angeordneten Verteiler (2) die Tauchglocke (8) auf der Hebegabel (9) aufsitzt.

10. Hebesystem nach einem der Ansprüche 8 oder 9, **dadurch gekennzeichnet, dass** die Tauchglocke (8) an einer Schwenklagerung (11) gelagert ist und vom Verteiler (2) weggeschwenkt wird, sobald die Unterkante der Tauchglocke (8) die Oberkante des Schachts (3) erreicht hat.

11. Hebesystem nach Anspruch 9, **dadurch gekennzeichnet, dass** die Tauchglocke (8) vom Verteiler (2) manuell lösbar ist.

12. Hebesystem nach einem der Ansprüche 8 bis 11, **dadurch gekennzeichnet, dass** der Schachtdeckel (4) an einer Schwenklagerung (11) schwenkbar gelagert ist.

13. Hebesystem nach Anspruch 12, **dadurch gekennzeichnet, dass** der Schachtdeckel (4) mittels der Hebegabel (9) schwenkbar ist.

14. Hebesystem nach einem der Ansprüche 8 bis 13, **dadurch gekennzeichnet, dass** an der Hebegabel (9) Rollenführungen (10) vorgesehen sind.

## Claims

1. Lifting system (1), by means of which a distributor (2) is movable into a shaft (3) and movable out of this, **characterised in that** a bell (8) is provided which is placed over the distributor (2) and held in a horizontal position so that no water can penetrate into the bell (8) as long as the distributor (2) is arranged wholly or partly in the shaft (3) and that when on movement of the distributor (2) out of the shaft (3) the lower edge of the bell (8) has reached the upper edge of the shaft (3) the distributor (2) is released from the bell (8) and that the bell (8) remains in its horizontal position during the entire process of movement of the distributor (2).

2. Lifting system according to claim 1, **characterised in that** the shaft (3) is closed by a shaft cover (4) when the distributor (2) has been moved into the shaft.

3. Lifting system according to claim 2, **characterised in that** when movement of the distributor (2) out of the shaft (3) takes place the shaft cover (4) is automatically opened.

4. Lifting system according to any one of claims 1 to 3, **characterised in that** this comprises a telescopic system by means of which the distributor (2) is vertically raisable or lowerable.

5. Lifting system according to claim 4, **characterised in that** the bell (8) is releasable from the distributor (2) by means of the telescopic system **in that** the bell (8) is movable upwardly out above the distributor (2).

6. Lifting system according to claim 5, **characterised in that** the bell (8) is attached to the underside of the shaft cover (4) and that the bell (8) together with the shaft cover (4) is movable upwardly away from the distributor (2) by means of the telescopic system.

7. Lifting system according to any one of claims 4 to 6, **characterised in that** the telescopic system comprises a spindle, a gas-pressure system or a hydraulic system.

8. Lifting system according to any one of claims 1 to 3, **characterised in that** this comprises a lifting fork (9) by means of which the distributor (2) is vertically raisable or lowerable.

9. Lifting system according to claim 8, **characterised in that** when the distributor (2) is arranged in the shaft (3) the bell (8) is seated on the lifting fork (9).

10. Lifting system according to one of claims 8 and 9, **characterised in that** the bell (8) is mounted on a pivot bearing (11) and is pivoted away from the distributor (2) as soon as the lower edge of the bell (8) has reached the upper edge of the shaft (3).

11. Lifting system according to claim 9, **characterised in that** the bell (8) is manually releasable from the distributor (2).

12. Lifting system according to any one of claims 8 to 11, **characterised in that** the shaft cover (4) is pivotably mounted on a pivot bearing (11).

13. Lifting system according to claim 12, **characterised in that** the shaft cover (4) is pivotable by means of the lifting fork (9).

14. Lifting system according to any one of claims 8 to 13, **characterised in that** roller guides (10) are provided at the lifting fork (9).

## Revendications

1. Système de levage (1) au moyen duquel un distributeur (2) peut être introduit dans un puits (3), et extrait de ce dernier, **caractérisé par le fait qu'**il est prévu une cloche d'immersion (8) enfilée sur le distributeur (2) et maintenue dans une position horizontale, de telle sorte que de l'eau ne puisse pas pénétrer dans ladite cloche d'immersion (8) aussi longtemps que ledit distributeur (2) se trouve intégralement ou partiellement dans ledit puits (3) ; **par le fait que** ledit distributeur (2) est sorti de ladite cloche d'immersion (8) lorsque le bord inférieur de ladite cloche d'immersion (8) a atteint le bord supérieur du puits (3), au cours de l'extraction dudit distributeur (2) hors dudit puits (3) ; et **par le fait que** ladite cloche d'immersion (8) demeure dans sa position horizontale durant la totalité du processus de déplacement dudit distributeur (2).

2. Système de levage selon la revendication 1, **caractérisé par le fait que** le puits (3) est obturé par un couvercle (4) lorsque le distributeur (2) est à l'état introduit dans ledit puits.

3. Système de levage selon la revendication 2, **caractérisé par le fait que** le couvercle (4) du puits est ouvert automatiquement au cours de l'extraction du distributeur (2) hors dudit puits (3).

4. Système de levage selon l'une des revendications 1 à 3, **caractérisé par le fait qu'**il est muni d'un système télescopique au moyen duquel le distributeur (2) peut être levé ou abaissé dans le sens vertical.

5. Système de levage selon la revendication 4, **caractérisé par le fait que** la cloche d'immersion (8) peut être dissociée d'avec le distributeur (2), au moyen du système télescopique, du fait que ladite cloche d'immersion (8) peut être déplacée vers le haut au-delà dudit distributeur (2).

6. Système de levage selon la revendication 5, **caractérisé par le fait que** la cloche d'immersion (8) est fixée à la face inférieure du couvercle (4) du puits ; et **par le fait qu'**au moyen du système télescopique, ladite cloche d'immersion (8) peut être déplacée vers le haut avec ledit couvercle (4) du puits, en s'éloignant du distributeur (2).

7. Système de levage selon l'une des revendications 4 à 6, **caractérisé par le fait que** le système télescopique présente une broche, un système à pression gazeuse ou un système hydraulique.

8. Système de levage selon l'une des revendications 1 à 3, **caractérisé par le fait qu'**il comporte une fourche de levage (9) au moyen de laquelle le distributeur (2) peut être levé ou abaissé dans le sens vertical.

9. Système de levage selon la revendication 8, **caractérisé par le fait que** la cloche d'immersion (8) repose sur la fourche de levage (9) lorsque le distributeur (2) est logé dans le puits (3).

10. Système de levage selon l'une des revendications 8 ou 9, **caractérisé par le fait que** la cloche d'immersion (8) est montée sur un palier de pivotement (11) et est éloignée du distributeur (2), par pivotement, aussitôt que le bord inférieur de ladite cloche d'immersion (8) a atteint le bord supérieur du puits (3).

11. Système de levage selon la revendication 9, **caractérisé par le fait que** la cloche d'immersion (8) peut être dissociée manuellement d'avec le distributeur (2).

12. Système de levage selon l'une des revendications 8 à 11, **caractérisé par le fait que** le couvercle (4) du puits est monté pivotant sur un palier de pivotement (11).

13. Système de levage selon la revendication 12, **caractérisé par le fait que** le couvercle (4) du puits peut être animé de pivotements au moyen de la fourche de levage (9).

14. Système de levage selon l'une des revendications 8 à 13, **caractérisé par le fait que** des guides à rouleaux (10) sont prévus sur la fourche de levage (9).
